# EUROPÄISCHE PATENTANMELDUNG

(11) **EP 2 272 384 A1**
(43) Veröffentlichungstag der Anmeldung: **12.01.2011**
(21) Anmeldenummer: 09008927.7
(22) Anmeldetag: 08.07.2009
(51) Int. Cl.: A23L 2/54, B01F 3/04

(54) **Verfahren und Vorrichtung zur Getränkeherstellung**

(71) Anmelder: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Schroth, Helmut, 68723 Plankstadt (DE)
(74) Vertreter: Grünecker, Kinkeldey, Stockmair & Schwanhäusser Anwaltssozietät

(57) **Zusammenfassung**

Die Erfindung betrifft ein Verfahren zur Getränkeherstellung, bei dem die Grundkomponenten des Getränks in mindestens einem Batch-Tank ausgemischt werden, sowie eine entsprechende Vorrichtung. Dadurch, dass das Getränk in dem Batch-Tank karbonisiert wird, ist eine nachgeschaltete Einheit zur Karbonisierung entbehrlich. Das erfindungsgemäße Verfahren und die entsprechende Vorrichtung sind daher besonders ökonomisch und vielseitig.

## Beschreibung

Die Erfindung betrifft ein Verfahren bzw. eine Vorrichtung zur Getränkeherstellung nach dem Oberbegriff des Anspruchs 1 bzw. 11.

Es ist allgemein bekannt, dass Getränke sowohl kontinuierlich als auch im sogenannten Batch-Verfahren ausgemischt werden können, beispielsweise mit zwei Ansatzbehältern pro Abfülllinie. Das Dosieren und Mischen der Grundkomponenten eines Getränks in den Batch-Tanks sowie das Entleeren der Tanks erfolgt dann wechselweise und erlaubt eine quasikontinuierliche Produktion. Bekannte Batch-Verfahren eignen sich besonders für stille Produkte, wie Säfte und saftähnliche Produkte.

Karbonisierte Getränke können bei bekannten Batch-Verfahren lediglich vorgemischt werden und müssen anschließend im kontinuierlichen Verfahren dosiert und mit entgastem Wasser und Kohlendioxid zum fertigen Getränk vermischt werden. Das fertige Getränke wird in einem Drucktank bei konstantem Druck gepuffert, um Leistungsschwankungen während der Abfüllung auszugleichen. Bei steigendem Füllstand im Tank kann der Druck jedoch nur durch Abblasen von Kohlendioxid konstant gehalten werden. Die dadurch verursachten Kohlendioxidverluste sind unerwünscht. Außerdem wird eine große Zahl einzelner Behälter zur Entgasung, Ausmischung, Karbonisierung und Pufferung des Getränks benötigt.

Bei der komplett kontinuierlichen Ausmischung von Getränken in einem Mehrkomponentenmischer werden sämtliche Rezepturkomponenten in einer Anlage mengenproportional dosiert, ausgemischt und karbonisiert. In der Regel ist der Ausmischung eine Wasserentgasung zur Minimierung des Sauerstoffgehaltes vorgeschaltet. Solche Anlagen sind jedoch entweder sehr aufwändig, da für jede Komponente eine eigene Dosierung vorzusehen ist, oder in der Anzahl mischbarer Komponenten eingeschränkt.

Es besteht somit Bedarf für ein zur Mischung und Karbonisierung unterschiedlicher Getränke flexibel einsetzbares und ökonomisches Verfahren, sowie für eine Mischvorrichtung mit im Vergleich zum Stand der Technik reduziertem apparativen Aufwand.

Dies wird mit einem Verfahren erreicht, bei dem das Getränk im Batch-Tank karbonisiert wird. Dadurch, dass das Ausmischen und das Karbonisieren im selben Behälter erfolgt, ist eine nachgeschaltete Karbonisierung in einer separaten Einheit entbehrlich. Vorzugsweise wird das Getränk gleichzeitig ausgemischt und karbonisiert. Dies ermöglicht eine zeitsparende Ausmischung und eine effektive Ausnutzung der eingesetzten Ressourcen.

Bei einer besonders günstigen Ausgestaltung wird dem Getränk während des Ausmischens in einer Zirkulationsschleife Kohlendioxid zugeführt. Dadurch lässt sich die Karbonisierung des Getränks, und bei Bedarf die Entgasung, kontinuierlich und besonders genau einstellen.

Vorzugsweise wird das Getränk während des Ausmischens in einer Zirkulationsschleife untersucht. Dadurch kann die Produktzusammensetzung bereits vor der Abfüllung kontrolliert und bei Bedarf korrigiert werden. Dies gewährleistet eine gleichbleibend hohe Qualität.

Vorzugsweise wird der Batch-Tank vor dem Einleiten der Grundkomponenten auf einen Sättigungsdruck mit Kohlendioxid vorgespannt. Die Karbonisierung kann so einfach auf unterschiedliche Getränke und Temperaturen und weitgehend unabhängig von einer möglichen Vorkarbonisierung und anderen gelösten Fremdgasen, wie Sauerstoff, angepasst werden.

Bei einer besonders günstigen Weiterbildung der Erfindung wird überschüssiges Kohlendioxid aus dem Batch-Tank in das Getränk oder in zumindest eine zulaufende Grundkomponente eingeleitet. Dadurch kann das Kohlendioxid in den Produktkreislauf zurückgeführt und der Kohlendioxidverbrauch gesenkt werden.

Bei einer vorteilhaften Ausführungsform wird im Batch-Tank der Sauerstoffgehalt des Getränks reduziert. Damit wird eine separate Entgasung der Hauptkomponente des Getränks, wie z. B. Wasser, entbehrlich.

Vorzugsweise wird Kohlendioxid als Strippgas für Sauerstoff verwendet. Damit kann das Kohlendioxid sowohl zur Karbonisierung als auch zur Entgasung verwendet und das Verfahren vereinfacht werden.

Bei einer günstigen Ausführungsform wird in den Batch-Tank eine entgaste Hauptkomponente des Getränks, insbesondere Wasser, eingeleitet. Dadurch kann das Verfahren auch in bereits bestehenden Anlagen mit separater Entgasung angewendet werden. Vorzugsweise wird das Verfahren im quasikontinuierlichen Betrieb durchgeführt, bei dem das Getränk wechselweise in einem Batch-Tank ausgemischt und karbonisiert und aus einem weiteren Batch-Tank ausgeleitet wird. Eine angeschlossene Abfülllinie kann dann kontinuierlich betrieben werden.

Die zugrunde liegende technische Aufgabe wird ferner durch eine Mischvorrichtung zur Getränkeherstellung gelöst, die eine Kohlendioxidzuleitung zum Einleiten von Kohlendioxid in den Batch-Tank umfasst. Das Ausmischen und das Karbonisieren kann folglich im selben Behälter erfolgen. Eine nachgeschaltete Karbonisierung in einer separaten Einheit ist daher entbehrlich.

Vorzugsweise umfasst die Mischvorrichtung ferner eine Zirkulationsleitung für das Getränk, die so mit dem Batch-Tank verschaltet ist, dass das Getränk im Kreislauf gefahren werden kann. In der Zirkulationsleitung kann die Qualität des Getränk auf einfache Weise untersucht und bei Bedarf kontinuierlich korrigiert werden.

Eine besonders günstige Ausführungsform umfasst eine weitere Kohlendioxidzuleitung zum Einleiten von Kohlendioxid in die Zirkulationsleitung. Dadurch kann die Karbonisierung und gegebenenfalls die Entgasung kontinuierlich durchgeführt und überwacht werden.

Vorzugsweise umfasst die Mischvorrichtung ferner eine Kohlendioxid-Rückführleitung, die so verschaltet ist, dass überschüssiges Kohlendioxid aus dem Batch-Tank in das Getränk oder zumindest eine zulaufende Grundkomponente des Getränks eingeleitet werden kann. Dadurch kann der Kohlendioxidverbrauch reduziert werden.

Eine günstige Ausführungsform umfasst ferner einen Entgasungsbehälter für eine dem Getränk beizumischende Hauptkomponente, insbesondere Wasser. Die Vorrichtung kann so einfach in bestehende Anlagen integriert werden.

Bevorzugte Ausführungsformen sind in der Zeichnung dargestellt. Es zeigen:
- Figur 1: Schema einer Mischanlage für Getränke zur Durchführung des Verfahrens gemäß einer ersten Ausführungsform der Erfindung;
- Figur 2: Schema einer Mischanlage für Getränke zur Durchführung des Verfahrens gemäß einer zweiten Ausführungsform der Erfindung;

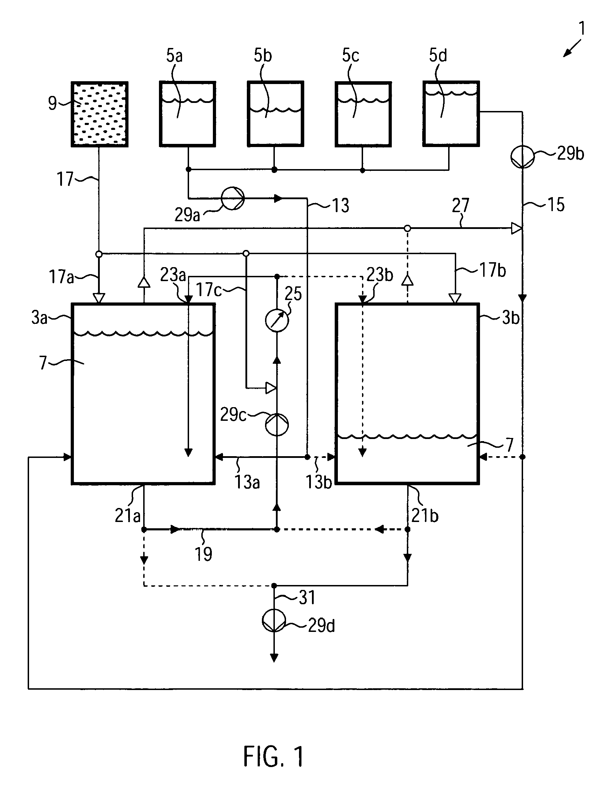

Wie Figur 1 erkennen lässt, umfasst eine erfindungsgemäße Mischvorrichtung 1 einer ersten Ausführungsform zwei Ansatzbehälter, nämlich einen ersten Batch-Tank 3a und einen zweiten Batch-Tank 3b, die im gegenseitigen Wechsel mit Grundkomponenten 5a-d eines Getränks 7 und mit Kohlendioxid 9 befüllt und nach Ausmischung, Karbonisierung und Entgasung des Getränks 7 entleert werden. In Fig. 1 wird das Getränk 7 im Tank 3a gemischt und aus dem Tank 3b zur Abfüllung geleitet. Die beiden Batch-Tanks 3a, 3b sind für eine quasikontinuierliche Produktion für eine Abfülllinie ausreichend; weitere Batch-Tanks könnten jedoch vorgesehen werden.

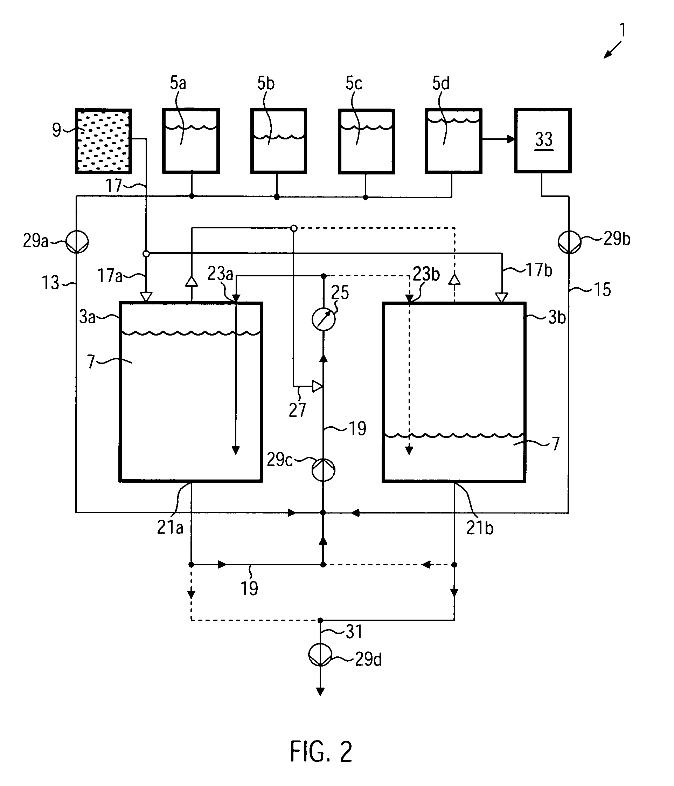

Flüssigkeitsströme sind in Fig. 1 und 2 durch schwarze Pfeile gekennzeichnet, Gasströme durch weiße Pfeile, offene Leitungsverzweigungen durch durchgezogene Linien und geschlossene Leitungsverzweigungen durch gestrichelte Linien. Geeignete Stellelemente zum Dosieren und zum Öffnen bzw. Schließen der Leitungen sind allgemein bekannt und der Übersichtlichkeit halber nicht dargestellt.

Die Grundkomponenten 5a - 5c sind beispielsweise Säfte, Sirupe, Säuren, Essenzen oder Zusätze aller Art. Die Grundkomponente 5d ist die Hauptkomponente des Getränks 7, üblicherweise Wasser. Als Grundkomponente 5d kann jedoch auch ein Produkt bzw. Zwischenprodukt zum Einsatz kommen, wie z. B. Bier. Die Grundkomponenten 5a - 5d, deren Anzahl vom Beispiel abweichen kann, sowie das Kohlendioxid 9 werden aus geeigneten Komponentenstationen, wie Vorratstanks und/oder Versorgungsnetzen, in bekannter Weise eingespeist.

Im Beispiel werden die Komponenten 5a - 5d je nach Bedarf nacheinander oder gemeinsam zudosiert und über eine Komponenten-Versorgungsleitung 13 in den Tank 3a gefördert. Die Zuleitung 13 zweigt sich in die den jeweiligen Tanks 3a, 3b zugeordneten Äste 13a und 13b auf, wobei sich diese wechselweise öffnen bzw. schließen lassen. In Fig. 1 ist die Leitung 13a geöffnet dargestellt, um zu verdeutlichen, dass diese während des Befüllens und gegebenenfalls auch während des Ausmischens, z. B. zum Nachdosieren der Komponenten 5a - 5d, zumindest zeitweise geöffnet ist. Die Leitung 13b ist dagegen während des Entleeren des Tanks 3b geschlossen.

Auch die Kohlendioxid-Versorgungsleitungen 17a - 17c sind geöffnet dargestellt, um zu verdeutlichen, dass Kohlendioxid 9 bei Bedarf zum Vorspannen des Tanks 3a, zum Karbonisieren und Entgasen in der nachfolgend beschriebenen Zirkulationsschleife 19 und zum Druckerhalt im Tank 3b über dem sich absenkenden Flüssigkeitspegel eingeleitet werden kann.

Die Hauptkomponente 5d kann sowohl über die Komponenten-Versorgungsleitung 13, beispielsweise zum Zweck der Spülung bzw. Dosierung, als auch über eine eigene Hauptkomponenten-Versorgungsleitung 15 wechselweise in die Tanks 3a, 3b eingespeist werden.

Das Kohlendioxid 9 wird über eine Kohlendioxid-Versorgungsleitung 17 und deren Leitungsverzweigungen 17a, 17b in die Tanks 3a, 3b und über eine Leitungsverzweigung 17c in eine Zirkulationsschleife bzw. -leitung 19 für das zu mischende Getränk 7 je nach Bedarf eingeleitet. Die Zirkulationsschleife 19 verbindet im Beispiel den Ausgang 21 a und den Eingang 23a des zum Ausmischen verwendeten Tanks 3a. In der Zirkulationsschleife 19 sind Messeinrichtungen 25 zur Qualitätskontrolle des Getränks 7 vorgesehen, beispielsweise zur Bestimmung des Leitwerts, Sauerstoffgehalts und /oder Brix-Werts.

Zum Abführen überschüssigen Kohlendioxids 9 aus den Tanks 3a bzw. 3b ist eine Kohlendioxid-Rückführleitung 27 vorgesehen, mit der das Kohlendioxid 9 zumindest in eine Grundkomponente 5a - 5d, vorzugsweise in die Hauptkomponente 5d, eingeleitet und somit in den Produktkreislauf zurückgeführt werden kann. Das überschüssige Kohlendioxid 9 kann dabei als Strippgas zum Reduzieren des Sauerstoffgehalts und oder zum Karbonisieren des Produkts dienen.

Ergänzend sind in Fig. 1 und 2 mehrere Pumpen 29a - 29d angedeutet, wobei deren Anzahl und Lage von den gezeigten Schaltbildern abweichen können.

Mit der Anordnung aus Fig. 1 kann wie folgt gearbeitet werden:
Während fertig gemischtes Getränk 7 aus dem Tank 3b zur Abfüllung über die Leitung 31 ausgeleitet wird, wird der Tank 3a mit Kohlendioxid 9 zunächst auf Sättigungsdruck vorgespannt und mit den Komponenten 5a - 5d gemäß Rezeptur befüllt. Um einen Druckanstieg beim Befüllen des Tanks 3a zu vermeiden, wird das aus diesem verdrängte, überschüssige Kohlendioxid 9 auf geeignete Weise in eine oder mehrere der zulaufenden Komponenten 5a - 5d geleitet.

Bei Erreichen eines vorgegebenen Füllstands des Tanks 3a beginnt die Zirkulation der Komponenten 5a - 5d bzw. des Getränks 7 aus dem Tank 3a durch die Zirkulationsschleife 19 und wieder zurück in den Tank 3a. Währenddessen wird die Produktqualität in der Zirkulationsschleife 19 überprüft sowie über die Leitung 17c Kohlendioxid 9 für die Karbonisierung und/oder Entgasung des Getränks 7 zugeführt.

Die Vermischung der Komponenten 5a - 5d im Tank 3a bzw. die gleichzeitige Karbonisierung und Entgasung des Getränks 7 erfolgt über geeignete Mischköpfe (nicht gezeigt). Das Kohlendioxid 9 im Tank 3a dient sowohl der Karbonisierung als auch als Strippgas zur Reduktion des Sauerstoffs im Getränk 7 und wird während des Ausmischens je nach Bedarf eingeleitet.

In den Tank 3b wird während des Entleerens ebenfalls Kohlendioxid eingeleitet, um den Sättigungsdruck im Tank 3b auch bei abnehmendem Flüssigkeitsstand zu halten. Das zu diesem Zweck eingeleitete Kohlendioxid 9 kann nach dem Entleeren zum anschließenden Vorspannen des Tanks 3b beim nächsten Batch-Wechsel im Tank 3b verbleiben.

Fig. 2 zeigt ein Schema einer zweiten Ausführungsform der Erfindung, die sich von der ersten Ausführungsform im Wesentlichen dadurch unterscheidet, dass der Sauerstoffgehalt der Hauptkomponente 5d nicht in den Tanks 3a bzw. 3b sondern in einem gesonderten Entgasungsbehälter 33 reduziert wird. Entsprechend wird das Kohlendioxid 9 in den Tanks 3a bzw. 3b beim Ausmischen nur zum Karbonisieren des Getränks 7 eingesetzt, jedoch nicht als Strippgas für enthaltenen Sauerstoff. Der Verfahrensablauf bzw. die Bestandteile der Mischvorrichtung 1 entsprechen ansonsten, und wo nicht anders angegeben, dem Verfahren bzw. der Anordnung der ersten Ausführungsform. Die beschriebenen Merkmale der Ausführungsformen können jedoch auch miteinander kombiniert werden.

Im Unterschied zur ersten Ausführungsform wird das überschüssige Kohlendioxid 9, da es nicht zur Entgasung benötigt wird, in die Zirkulationsschleife 19 eingeleitet und auf diese Weise in den Produktkreislauf zurückgeführt.

Die Fig. 2 zeigt ferner eine Variante der Leitungsführung der Versorgungsleitungen 13 und 15, bei der die Komponenten 5a - 5d nicht direkt sondern über die Zirkulationsschleife 19 in den jeweiligen Tank 3a bzw. 3b eingeleitet werden. Die in den Figuren 1 und 2 gezeigten Zuleitungsvarianten sind alternativ einsetzbar. Entscheidend ist, dass eine Zirkulation des zu mischenden und zu karbonisierenden Getränks 7 durch die Schleife 19 möglich ist.

Die Erfindung hat den Vorteil, dass Getränke 7 im Batch-Verfahren quasikontinuierlich hergestellt werden können, wobei die Entgasung, Dosierung, Mischung und Karbonisierung in einer kompakten Anlage zusammengefasst sind. Bei der ersten Ausführungsform entfällt zudem die Notwendigkeit für einen separaten Entgasungsbehälter.

Das beschriebene Batch-Verfahren kann eine beliebige Zahl einzelner Getränkekomponenten 5a - 5d in gegebenenfalls stark unterschiedlichen Mengen dosieren und ist somit vielseitig für unterschiedliche Getränkerezepturen einsetzbar.

Die Anlage eignet sich dabei sowohl für die Herstellung von stillen und karbonisierten Fertiggetränken als auch für die Herstellung von Getränkesirupen.

Der Kohlendioxidverbrauch wird durch wechselweise Verwendung der Tanks 3a, 3b zum Mischen bzw. Abfüllen und durch die Rückführung überschüssigen Kohlendioxids 9 minimiert.

Die Zirkulationsschleife 19 ermöglicht eine Produktkontrolle während der Herstellung des Getränks 7, also bereits vor der eigentlichen Abfüllung. Das heißt, die Zusammensetzung des Getränks 7 kann vor der Abfüllung durch eventuell notwendige Nachdosierung einer oder auch mehrerer Komponenten 5a - 5d korrigiert werden. Dies garantiert eine gleichbleibend hohe Produktqualität.

Das beschriebene Verfahren bzw. die Mischvorrichtung lassen sich flexibel und einfach durch zusätzliche Komponentenstationen erweitern bzw. an neue Anforderungen anpassen. Dies geht mit geringen Investitions- und Betriebskosten einher, besonders dann, wenn eine Komponenten- bzw. Entgasungsstation mehreren Produktionslinien zugeordnet werden kann, bzw. wenn bereits vorhandene Komponentenstationen integriert oder angebunden werden können. Das beschriebene Batch-Verfahren ermöglicht eine zentrale Bevorratung der Komponenten und kann bei geringem Personaleinsatz durchgeführt werden. Eine Vielzahl unterschiedlicher Getränke kann daher kostengünstig ausgemischt und abgefüllt werden.

## Patentansprüche

1. Verfahren zur Getränkeherstellung, bei dem die Grundkomponenten (5a - 5d) des Getränks (7) in mindestens einem Batch-Tank (3a, 3b) ausgemischt werden,
**dadurch gekennzeichnet, dass**
das Getränk (7) in dem Batch-Tank (3a, 3b) karbonisiert wird.

2. Verfahren nach Anspruch 1, **dadurch gekennzeichnet, dass** das Getränk (7) gleichzeitig ausgemischt und karbonisiert wird.

3. Verfahren nach Anspruch 1 oder 2, **dadurch gekennzeichnet, dass** dem Getränk (7) während des Ausmischens in einer Zirkulationsschleife (19) Kohlendioxid (9) zugeführt wird.

4. Verfahren nach mindestens einem der vorigen Ansprüche, **dadurch gekennzeichnet, dass** das Getränk (7) während des Ausmischens in einer Zirkulationsschleife (19) untersucht wird.

5. Verfahren nach mindestens einem der vorigen Ansprüche, **dadurch gekennzeichnet, dass** der Batch-Tank (3a, 3b) vor dem Einleiten der Grundkomponenten (5a - 5d) auf einen Sättigungsdruck mit Kohlendioxid (9) vorgespannt wird.

6. Verfahren nach mindestens einem der vorigen Ansprüche, **dadurch gekennzeichnet, dass** überschüssiges Kohlendioxid (9) aus dem Batch-Tank (3a, 3b) in das Getränk (7) oder in zumindest eine zulaufende Grundkomponente (5a - 5d) eingeleitet wird.

7. Verfahren nach mindestens einem der vorigen Ansprüche, **dadurch gekennzeichnet, dass** in dem Batch-Tank (3a, 3b) der Sauerstoffgehalt des Getränks (7) reduziert wird.

8. Verfahren nach mindestens einem der vorigen Ansprüche, **dadurch gekennzeichnet, dass** Kohlendioxid (9) als Strippgas für Sauerstoff verwendet wird.

9. Verfahren nach mindestens einem der vorigen Ansprüche, **dadurch gekennzeichnet, dass** in den Batch-Tank (3a, 3b) eine entgaste Hauptkomponente (5d) des Getränks (7), insbesondere Wasser, eingeleitet wird.

10. Verfahren nach mindestens einem der vorigen Ansprüche, **gekennzeichnet durch** einen quasikontinuierlichen Betrieb, bei dem das Getränk (7) wechselweise in einem Batch-Tank (3a, 3b) ausgemischt und karbonisiert und aus einem weiteren Batch-Tank (3a, 3b) ausgeleitet wird.

11. Mischvorrichtung zur Getränkeherstellung, mit mindestens einem Batch-Tank (3a, 3b) zum Ausmischen von Grundkomponenten (5a - 5d) eines Getränks (7), **gekennzeichnet durch**
eine Kohlendioxidzuleitung (17a, 17b) zum Einleiten von Kohlendioxid (9) in den Batch-Tank (3a, 3b).

12. Mischvorrichtung nach Anspruch 11, ferner **gekennzeichnet durch** eine Zirkulationsleitung (19) für das Getränk (7), die so mit dem Batch-Tank (3a, 3b) verschaltet ist, dass das Getränk (7) im Kreislauf gefahren werden kann.

13. Mischvorrichtung nach Anspruch 12, ferner **gekennzeichnet durch** eine weitere Kohlendioxidzuleitung (17c, 27) zum Einleiten von Kohlendioxid (9) in die Zirkulationsleitung (19).

14. Mischvorrichtung nach mindesten einem der Ansprüche 11 bis 13, ferner **gekennzeichnet durch** eine Kohlendioxid-Rückführleitung (27), die so verschaltet ist, dass überschüssiges Kohlendioxid (9) aus dem Batch-Tank (3a, 3b) in das Getränk (7) oder zumindest eine zulaufende Grundkomponente (5a - 5d) des Getränks (7) eingeleitet werden kann.

15. Mischvorrichtung nach mindesten einem der Ansprüche 11 bis 14, ferner **gekennzeichnet durch** einen Entgasungsbehälter (33) für eine dem Getränk (7) beizumischende Hauptkomponente (5d), insbesondere Wasser.
